(19)

**Europäisches Patentamt**
**European Patent Office**
**Office européen des brevets**

(11) **EP 4 589 529 A1**

(12) **EUROPEAN PATENT APPLICATION**

(43) Date of publication:
**23.07.2025 Bulletin 2025/30**

(21) Application number: **24152423.0**

(22) Date of filing: **17.01.2024**

(51) International Patent Classification (IPC):
**G06T 7/33** (2017.01)   **G06T 7/80** (2017.01)

(52) Cooperative Patent Classification (CPC):
**G06T 7/33; G06T 7/80;** G06T 2207/20081;
G06T 2207/20084; G06T 2207/30004

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
• **KRUEGER, Sascha**
**5656 AG Eindhoven (NL)**
• **SOMMER, Karsten**
**5656 AG Eindhoven (NL)**

(74) Representative: **Philips Intellectual Property &
Standards**
**High Tech Campus 52**
**5656 AG Eindhoven (NL)**

(54) **COORDINATE SYSTEM CALIBRATION OF AN OPTICAL SENSOR SYSTEM**

(57)    Disclosed herein is a method for calibrating a first coordinate system of a field of view of an optical sensor system (140). The calibrating comprises a registering of the first coordinate system with a second coordinate system of a medical imaging system (100) using a keypoint detection module (412). The keypoint detection module (412) is configured for detecting as output keypoint elements (122) of a patient table (120) of the medical imaging system (100) within optical sensor data (414) in response to receiving the optical sensor data (414). The method comprises determining three-dimensional coordinates values descriptive of positions of detected keypoint elements (122) within the first coordinate system and receiving three-dimensional coordinates values descriptive of the positions of the detected keypoint elements (122) within the second coordinate system. One or more transformation parameters (420) are determined for a transformation from the first coordinate system to the second coordinate system.

Fig. 2

EP 4 589 529 A1

**Description**

FIELD OF THE INVENTION

The invention relates to medical imaging, in particular to a method for calibrating a coordinate system of a field of view of an optical sensor system configured for a supervision of a medical imaging system, a computer program comprising machine executable instructions for execution of the method, a computing device for execution of the method, and a medical imaging system comprising the computing device.

BACKGROUND OF THE INVENTION

For a supervision of medical imaging systems, like magnetic resonance imaging systems, computed tomography systems, or X-ray imaging systems, optical sensor systems may be used. In order to be able to determine positions of target structures, like a patient and/or components of the medical imaging system, within optical sensor data acquired using such an optical sensor system, a calibration of a coordinate system of the optical sensor system is necessary. The calibration comprises a determination of a transformation of coordinate values of the coordinate system of the optical sensor system into coordinate values of a coordinate system of the medical imaging system. Based on the calibration, it can be determined, which coordinate values within the coordinate system of the optical sensor system correspond to which coordinate values within the coordinate system of the medical imaging system.

For this purpose, currently calibration phantoms are used that are configured to be aligned with the medical imaging system and at the same time are configured to be measurable with the optical sensor system. For the alignment, the medical imaging system in general has to be brought in a specific predefined configuration, e.g., specific parts of the medical imaging system have to be arranged in a predefined position with respect to the rest of the medical imaging system, in order to enable an alignment of the calibration phantoms with the medical imaging system in the predefined position.

The calibration phantom may comprise a checkerboard or other known pattern, e.g., including asymmetric elements. The size of the calibration phantom is chosen such that the field of view of the optical sensor system is sufficiently covered. This in general requires a rather large, up to human size phantom. This phantom has to be stored on-site or a field service needs to be able to re-create, e.g., print, it on the spot. Due to the size, storage may not be straightforward in a hospital environment. Recreating the phantom on -site may on the other hand easily result in errors, e.g., due to a wrong scale of the print-out or misalignments of individual parts, if individual parts have to be connected with each other using, e.g., adhesives etc. Typically, a compromise has to be made between handling of the phantom and calibration precision achievable using the phantom. This in general results in drawbacks regarding the calibration precision. Furthermore, field service personnel has to be physically present at the site to perform the calibration procedure using the phantom.

SUMMARY OF THE INVENTION

The invention provides for a method for calibrating a coordinate system of a field of view of an optical sensor system, for a computer program comprising machine executable instructions for execution of such a method, and for a computing device for execution of such method. Furthermore, the invention provides for a medical imaging system comprising such a computing device for execution of the method.

In one aspect, the invention provides for a method for calibrating a first coordinate system of a field of view of an optical sensor system. The calibrating comprises a registering of the first coordinate system with a second coordinate system of a medical imaging system using a computing device. The computing device comprises a keypoint detection module configured for detecting as output keypoint elements of a patient table of the medical imaging system within optical sensor data in response to receiving the optical sensor data, which is acquired using the optical sensor system. The optical sensor system is configured for a supervision of the medical imaging system.

The method comprises receiving optical sensor data acquired using the optical sensor system. The received optical sensor data comprises optical sensor data of the patient table.

The keypoint elements are detected within the optical sensor data using the keypoint detection module.

Using the optical sensor data, two-dimensional horizontal coordinate values of the detected keypoint elements within the first coordinate system are determined. The two-dimensional horizontal coordinate values are descriptive of positions of the detected keypoint elements in planes parallel to a sensor plane of the optical sensor system.

Third vertical coordinate values of the detected keypoint elements within the first coordinate system are determined. The third vertical coordinate values are descriptive of distances of the positions of the detected keypoint elements from the sensor plane of the optical sensor system.

Three-dimensional coordinates values descriptive of the positions of the detected keypoint elements within the second coordinate system of the medical imaging system are received.

One or more transformation parameters for a transformation from the first coordinate system to the second coordinate system are determined using the coordinate values descriptive of the positions of the detected keypoint elements within the first coordinate system and the coordinate values descriptive of the positions of the detected keypoint elements within the second coordinate system.

Examples enable a calibration, which does not require an additional calibration phantom. Rather than using an additional calibration phantom, the patient table is used for executing the calibration. Using a component of the medical imaging system for the calibration may have the beneficial effect, that the calibration may be executed anytime without requiring additional elements or components arranged within the medical imaging system. Furthermore, using a component of the medical imaging system for the calibration may enable a remote and/or automated calibration without requiring field service personnel physically present at the site to perform the calibration.

For example, one or more individual transformation parameters may be determined for the coordinate values of the individual keypoint elements. The determined one or more transformation parameters for the transformation from the first coordinate system to the second coordinate system may, e.g., be mean values of the one or more individual transformation parameters.

For example, the determining of transformation parameters may be executed for different position of the patient table and the resulting transformation parameters for the different positions of the patient table used to determine one or more transformation parameters for the transformation from the first coordinate system to the second coordinate system, e.g., as mean values of the one or more transformation parameters for the different positions of the patient table.

For example, the keypoint detection module may be configured for determining positions of the detected keypoint elements of the patient table within the first coordinate system. The keypoint detection module may be configured for determining the two-dimensional horizontal coordinate values of the detected keypoint elements and/or for determining the third vertical coordinate values of the detected keypoint elements within the first coordinate system.

Based on the calibration, it can be determined, which coordinate values within the coordinate system of the optical sensor system correspond to which coordinate values within the coordinate system of the medical imaging system. Using the transformation, it can be determined where a target structures, like a patient and/or components of the medical imaging system, is positioned in the physical world with respect to the medical imaging system based on positions of the target structures determined within the optical sensor data. For detecting target structures, i.e., keypoint elements of target structures, a keypoint detection module may be used, which is configured for detecting as output keypoint elements of the target structures within optical sensor data in response to receiving optical sensor data acquired using the optical sensor system. This keypoint detection module configured for keypoint elements of the target structures may be the same keypoint detection module configured for keypoint elements of the patient table or another keypoint detection module. In addition, the keypoint detection module may be configured for determining positions of the keypoint elements of the target structures within the first coordinate system.

The optical sensor system, e.g., in combination with artificial intelligence (AI) algorithms, such as machine learning module, may be used for guiding and automating patient setups in the medical imaging system. Furthermore, the optical sensor systems may, e.g., be used for detect non-ideal and/or unsafe system uses as well as non-ideal and/or unsafe setup configurations. For example, a position of a patient on the patient table and/or positions of components of the medical imaging system, like cables and/or coils, in particular relative to the patient and/or patient table, may be checked. Furthermore, a positioning of the patient table within the medical imaging system may be controlled based on the detected position of patient, in order to arrange the patient at a predefined position within the medical imaging system for an acquisition of medical imaging data.

When using such AI algorithms, the underlying AI algorithms rely on detecting a patient's body and anatomy, as well as relevant equipment parts of the medical imaging system based on optical sensor data acquired using the optical sensor system. To achieve a high detection precision, a coordinate system of the optical sensor system, i.e., the coordinate system of a field of view of an optical sensor system, needs to be calibrated and registered with respect to a coordinate system of the imaging modality, i.e., a second coordinate system of the medical imaging system.

Such a calibration is a pre-condition for being able to identify real-world positions of elements, which are detected in the optical sensor data, i.e., within the first coordinate system. Real-world positions here refer to positions within the second coordinate system of a medical imaging system.

Installing a medical imaging system, like an MRI system, is a time-consuming process by itself and adding any complexity to this process only increases the challenge. Examples provide an approach for facilitating this process.

Examples enable a simple and efficient calibration, which may, e.g., be executed together with other installation steps of the medical imaging system, which may, e.g., be executed remotely, and/or which may, e.g., be executed automatically. A keypoint detection module, which, e.g., comprises a neural network model, is used for detecting specific keypoint elements of a patient table of the medical imaging system. Such a keypoint detection module may be implemented in form of a machine learning module. For example, the keypoint detection module may use a fully convolutional U-net architecture for detecting keypoint elements. The U-Net architecture is described in Olaf Ronneberger, "U-Net: Convolutional Networks for Biomedical Image Segmentation" (https://arxiv.org/abs/1505.04597).

For example, the keypoint detection module may be configured to determine confidence levels for the detections of the keypoint elements within the optical sensor data. For example, the keypoint detection module may be configured for assigning confidence levels for the detections to the detected keypoint elements. The keypoint detection module may, e.g., during a training phase, be trained for assigning confidence levels to the detections to the keypoint elements detected within the training data. These confidence levels determined using the keypoint detection module may, e.g., be estimations trained using a loss function quantifying a deviation of the detections of the keypoint elements from a ground truth for the keypoint elements provided by the optical training data. The confidence levels may, e.g., be functions of an output of the keypoint detection module. A maximum, minimum, mean or integral of the output of the detection module may be examples of quantities, which may be used to derive a confidence metric within a training distribution provided by a plurality of optical training data. Out-of-distribution confidence values may, e.g., be derived using a temporal stability of an output signal of the keypoint detection module, a stability against perturbances of the output signal, like noise etc., or other spatial and/or temporal properties of the output signal provided by the keypoint detection module as a response to receiving optical sensor data as input.

The position of the patient table relative to the medical imaging system is a calibrated system parameter of the medical imaging system itself, i.e., the relative position of the patient table within the medical imaging system is, e.g., known. For example, the position of the patient table with respect to an imaging iso-center of the medical imaging system or some reference component, like, e.g., a gantry in case of an MRI system, is known. Using the patient table of the medical imaging system for the calibration has the beneficial effect that the patient table can in general be moved in three dimensions with all locations of keypoint elements of the patient table within the coordinate system of the medical imaging system accurately known at all times.

A patient setup, e.g., a preparation, in a medical imaging system is a time-consuming task, which in general requires trained personnel. The complexity of this task may draw attention away from the patient even for trained and skilled operators. Trying to execute this task in an effective and efficient way may result in increased stress levels of the operators. Thus, there is a danger that this situation may result in a limitation of consistency of examination quality, that it may impair patient's and/or operator's experience, as well as that a risk of errors including harm to the patient may arise.

Optical sensor systems may be used to address these issues by providing assistance in the patient setup where needed. Furthermore, assistance may be provided in detecting non-ideal and/or unsafe system uses as well as non-ideal and/or unsafe setup configurations.

The assistance relies on detecting the patient body and anatomy, as well as relevant parts of equipment of the medical imaging system based on optical sensor data acquired using the optical sensor system. Therefore, a high precision and robustness of the detection is required needed.

The optical sensor system may comprise a plurality of optical sensors. The optical sensors may, e.g., comprise one or more RGB-sensors, i.e., optical sensors configured to acquire optical sensor data comprising red (R), green (G), blue (B) light. The optical sensors may, e.g., comprise one or more depth sensors, i.e., optical sensors configured to determine distances of objects from the sensors, e.g., using triangulation. The optical sensors may, e.g., comprise one or more thermal sensors, i.e., optical sensors configured to acquire optical sensor data in the infrared (IR) range. For example, thermal sensors may acquire optical sensor data in the range from 1 $\mu$m to 15 $\mu$m, e.g., 10 $\mu$m at room temperature.

In order to be able to achieve a high detection precision for the detection of keypoint elements, the first coordinate system of the optical sensor system needs to be calibrated and registered with respect to the second coordinate system of the imaging modality, i.e., the optical sensor system. This registration-calibration is a site- and system-specific calibration, i.e., a calibration depending on the medical imaging system with the optical sensor system and its specific implementation on site, which is independent of the intrinsic calibrations of the optical sensor(s) of the optical sensor system by the manufacturer. The site- and system-specific calibration may, e.g., be executed as part of a field service maintenance step. For example, such a calibration may be executed during a setup of the medical imaging system with the optical sensor system and/or during low-cadence service intervals.

In addition, vibrations of the medical imaging system may occur which may require a monitoring of the correctness of the calibration for preventive maintenance. Such variations may, e.g., occur during imaging, like in case of an MRI system or a computed tomography (CT) system, or may be caused by a door closure. Examples may have the beneficial effect, that for such a monitoring no calibration phantom is required. For the monitoring essentially the calibration method may be repeated, the results compared with earlier calibration parameters and a test procedure may be executed, in order to determine, whether the earlier calibration parameters are still correct.

For example, a keypoint detection module is used for detecting specific keypoint elements of a patient table of the medical imaging system. For example, the keypoint detection module may comprise a neural network model. Dimensions of the table and positions of the keypoint elements as well as an orientation and rotation of the table may be known. Furthermore, the position of the patient table may be a calibrated system parameter of the medical imaging system itself, i.e., the position of the patient table with respect to the medical imaging system, e.g., a gantry and/or an imaging iso-center of the medical imaging system, may detected by and known to the medical imaging system. The position of the patient table with respect to the medical imaging system is, e.g., stored in a system configuration file of the medical imaging system.

Using the information regarding the position of the patient table with respect to the medical imaging system as well as the information regarding the positions of the keypoint elements with respect to the patient table, positions of the keypoint elements with respect to the medical imaging system and thus within the second coordinate system of the medical imaging system may be determined. This determination may, e.g., possible irrespective of where the table is positioned, both laterally and vertically, as long as this position relative of the patient table with respect to the medical imaging system is monitored by and known to the medical imaging system.

Thus, the patient table may efficiently be used to establish a calibration of the first coordinate system with high accuracy, since it may, e.g., be moved in three dimensions with the positions of the keypoint elements of the patient table within the second coordinate system accurately known at all times.

Using the patient table for the calibration may further have the beneficial effect that the patient table has a size corresponding to the size of the patient, which therefore represent an ideal size to calibrate the field of view of the optical sensor system for patient-related detections. Furthermore, the patient table defines a position, at which a patient will later be arranged for a medical imaging procedure executed using the medical imaging system. Therefore, calibrating the field of view of the optical sensor system focusing on the patient table results in a calibration, which is focused on a future position of the patient within the medical imaging system.

The keypoint detection module may, e.g., be trained to detect keypoint elements of the patient table using optical sensor data acquired of the patient table. The keypoint detection module may be trained to detect keypoint elements of the patient table using optical sensor data acquired of a three-dimensional physical model of the patient table. The keypoint detection module may be trained to detect keypoint elements of the patient table using a three-dimensional digital model of the patient table, e.g., a scale CAD model of the patient table, which is typically a stable and precise design so that availability may be assumed for a certain product range.

For example, a three-dimensional digital model, e.g., a scale CAD model, of the patient table is used for generating training data for training the keypoint detection module. Using a three-dimensional digital model may have the beneficial effect that the model may be provided with labels identifying the keypoint elements of the patient table to be detected. Different training data may be generated by scaling the three-dimensional digital model and/or generating, e.g., randomly, a background for the three-dimensional digital model. Such a background can be generated by a random combination of image data and/or a random processing of image data, like altering colors, altering a color distribution, rotating, translating, adding obstruction to and/or distorting the image data. Also, a position of the three-dimensional digital model may be varied.

For example, a simulation pipeline is used to generate synthetic training data for training the keypoint detection module.

For example, the keypoint detection module is configured for detecting a number of pre-defined keypoint elements of the patient table within optical sensor data of the patient table. For example, the keypoint elements are elements arranged at an upper side of the patient table. For example, the keypoint elements are elements distributed circumferentially around an upper side of the patient table, e.g., a reclining surface, along a contour line of the upper side of the patient table. The keypoint detection module may, e.g., comprise a neural network trained to detect the pre-defined relevant keypoint elements of the patient table within optical sensor data of the patient table.

The optical sensor system may, e.g., comprise one or more optical sensors. The optical sensor system may be arranged relative to the medical imaging system with the patient table, such that the patient table is contained in the field of view of the optical sensor system. For example, the optical sensor system may be arranged above the patient table looking from above onto the patient table. For example, the optical sensor system may be arranged above the patient table a home position of the patient table.

In case of a plurality of optical sensors with differing fields of view being comprised by the optical sensor system, the optical sensors may be arranged relative to the medical imaging system with the patient table, such that the patient table is contained in the fields of view of the optical sensors of the plurality of optical sensors.

The patient table of the medical imaging system may, e.g., be configured to be moved, e.g., in two to three dimensions, relative to the rest of the medical imaging system.

A depth sensing method may be used for determining distance values for the detected keypoint elements descriptive of distances of the keypoint elements to a sensor plane of the optical sensor system.

The depth sensing method may, e.g., comprise using a registered depth image, i.e., optical sensor data for which a depth map descriptive of the distances of the detected keypoint elements from the sensor plane of the optical sensor system is provided.

The depth sensing method may, e.g., comprise using momentary apparent lateral, i.e., horizontal, distances between the keypoint elements of the patient table as well as known apparent lateral distance between the keypoint elements at two known vertical distances of the patient table from the sensor plane of the optical sensor system, e.g., a known maximum distance of the patient table from the sensor plane as well as a known minimum distance of the patient table from the sensor plane. The position of the patient table with the minimum distance of the patient table from the sensor plane may, e.g., be a home position of the patient table. The momentary distance of the patient table and thus of the keypoint elements may be determined using, e.g., interpolation.

In case the keypoint elements are arranged at different levels in a vertical direction, the momentary distances of the keypoint elements may, e.g., take into account the distances of the keypoint elements in the vertical direction relative to a reference level of the patient table. The reference level of the patient table may, e.g., be an upper surface of the patient table, like a reclining surface of the patient table.

The depth sensing method may, e.g., comprise using at least two optical sensors arranged with a fixed baseline between the optical sensors and triangulating the distances of the keypoint elements from optical sensor data of the patient table acquired using the optical sensors.

The depth sensing method may, e.g., comprise moving the patient table form a first position, e.g., from a lowest position with a maximum distance from the sensor plane of the optical sensor system, to a second position, e.g., a highest position with a minimum distance from the sensor plane of the optical sensor system, resulting in optical sensor data of the patient table for multiple positions. From this optical sensor data of the patient table at multiple positions corresponding three-dimensional coordinate values of the keypoint elements may be determined. This optical sensor data may, e.g., be used for a pseudo-stereo approach for determining the distance of the keypoint elements from the images from sensor plane of the optical sensor system. The moving of the patient table may be controlled either manually or automatically in a system-controlled manner.

The calibration may, e.g., be performed using automatically stored optical sensor data of the patient table, preferably of the empty patient table. The execution of the calibration may, e.g., be triggered autonomously, e.g., when a miscalibration is detected. The calibration may, e.g., be a preventive calibration executed, in order to check the transformation parameters currently used by comparing them with transformation parameters determined by the preventive calibration.

Transformation parameters are determined for a transformation from the first coordinate system to the second coordinate system using the known and/or measured three-dimensional coordinates of the keypoint elements in both coordinate systems. The determined transformation parameters may comprise one or more rotations, one or more translations, a scaling, and/or one or more distortions.

A three-dimensional digital model of the patient table, e.g., a scale CAD model of the patient table may be provided for generating synthetic training data with defined keypoint elements and labels identifying the keypoint elements using a simulation pipeline. With the resulting synthetic training data, the keypoint detection module, e.g., a neural network comprised by keypoint detection module, is trained to detect the keypoint elements in optical data, in particular in optical sensor data, i.e., in a real scanning environment. For example, a fully convolutional U-net architecture may be used to encode probability maps of keypoint elements, e.g., two-dimensional gaussian heatmaps, from which coordinates of keypoint elements within the coordinate system of the field of view of the optical sensor system and confidence values may be estimated. But also other network architectures for the neural network may be suitable.

Using the keypoint detection module, unique points in three dimensions may be identified in the optical sensor data acquired using the optical sensor system. Additionally, a depth sensing method may be used for determining third coordinates, i.e., distances of the detected keypoint elements from the sensor plane of the optical sensor system.

The patient table is, e.g., moved from a first extreme position, e.g., from a lowest position with a maximum distance from the sensor plane of the optical sensor system to a second extreme position, e.g., a highest position with a minimum distance from the sensor plane of the optical sensor system. In the first extreme position, the patient table or an upper surface of the patient table, like a reclining surface, may, e.g., be arranged at a first height $h0$ = table-down. In the second extreme position, the patient table or an upper surface of the patient table, like a reclining surface, may, e.g., be arranged at a second height $h1$ = table-up. The position of the patient table at height $h1$ may, e.g., be a home position of the patient table. Both extreme positions may, e.g., be chosen such that for a given imaging modality, i.e., a given field of view, a relevant space of the patient area is covered. During movement of the patient table from one of the two extreme positions to the other, optical sensor data of the patient table may be acquired using the optical sensor system.

This movement may, e.g., be driven by the medical imaging system which may also trigger the data acquisition using the optical sensor system so that a patient table status of the medical imaging system and data acquisition are camera image are synchronized. Thus, for each data acquisition, the position of the patient table within the medical imaging system may be known.

Alternatively, the optical data itself may be used to determine a distance of the patient table from the sensor plane of the optical sensor system. The distance of the patient table from the sensor plane of the optical sensor system may be translated into a height $h$ of the patient table. The distance may, e.g., be determined in the optical sensor data from an apparent size $s\_h$ of the patient table in the optical sensor data compared to apparent sizes $s\_h0$ and $s\_h1$ of the patient table measured in the two extreme positions $h0$ and $h1$. The apparent size $s\_h$ of the patient table in the optical sensor data may, e.g., be determined by measuring distances between detected keypoint elements, e.g., arranged on opposing sides of the patient table. For determining the height $h$, the following formula may be used:

$$h = (s\_h - s\_h0)/(s\_h1 - s\_h0) * (h1 - h0) + h0.$$

For example, the position of the patient table surface with respect to the medical imaging system, e.g., the imaging iso-center of the medical imaging system, is known for the patient table arranged at height h1 in home position from calibration parameters of the medical imaging system itself. This information may then be used to compute three-dimensional positions of the keypoint elements in scanner space, i.e., within the second coordinate system, for the height h calculated above for a given image in the scanner space. Thus, three-dimensional coordinates values descriptive of the positions of the detected keypoint elements within the second coordinate system of the medical imaging system may be provided.

For the optical sensor space, i.e., the first coordinate system, two-dimensional positions of the keypoint elements may be determined using the optical sensor data. The determining of the two-dimensional positions of the keypoint elements may be part of the detection of the keypoint elements within the optical sensor data using the keypoint detection module.

The missing third coordinate values may be determined by a depth sensing method. For example, a registered depth image, i.e., optical sensor data for which a depth map descriptive of the distances of the detected keypoint elements from the sensor plane of the optical sensor system is provided, is used and the depth values, i.e., distances, of the keypoint element is simply read-out at the two-dimensional keypoint locations within the optical sensor data.

For example, a depth for a keypoint element d_kp may be reconstructed from an apparent size s_h of the patient table for the keypoint element at d_kp, as well as apparent sizes s_h0 and s_h1 of the patient table for respective reference depths d_rkp_h0 and d_rkp_h1 of a single reference keypoint element and the height difference D_kp_rkp between reference keypoint and the keypoint using the formula:

$$d\_kp = (s\_h - s\_h0)/(s\_h1 - s\_h0) * (d\_rkp\_h1 - d\_rkp\_h0)$$
$$+ d\_rkp\_h0 + D\_kp\_rkp.$$

For a given calibration, i.e., a given set of one or more transformation parameters, the patient table home position may be transformed from the second coordinate system of the medical imaging system to the first coordinate system of the field of view of the optical sensor system. For the transformation from the second coordinate system to the first coordinate system, inverse transformation parameters may be used. The resulting transformation estimate may be compared regularly with the actual results of the detection of the keypoint elements using the keypoint detection module applied to the optical sensor data of the patient table arranged in the home position. If a deviation between the transformation estimate and actual result is detected, which exceeds a predefined threshold, e.g., a notification may be generated and output. For example, additional optical sensor data may be acquired and recorded, e.g., automatically, for a new calibration of the first coordinate system. For example, the method for calibrating a first coordinate system may be repeated using the additional optical sensor data. The additional optical sensor data may, e.g., be selected to only comprise optical sensor data of the patenting table without patient or operator inside the table area. The additional optical sensor data may, e.g., be selected to comprise a predefined number of detected keypoint elements and/or a predefined number of detected keypoint elements with confidence values determined for the detected keypoint elements exceeding a predefined confidence threshold. Thus, a select of high-quality optical sensor data for the calibration may be ensured.

For example, a notification may be provided, e.g., output, in case an updated, e.g., accurate calibration is available, i.e., one or more updated transformation parameters for an updated transformation from the first coordinate system to the second coordinate system. The notification may be provided to an operator, who may activate the updated calibration.

For example, a test may be performed to compare a predicted patient table home position with an actual home position for new, i.e., updated, and old, i.e., currently used, calibration. For this purpose, suitable recent optical sensor data of the patient table, preferably the empty patient table, at home position is drawn from the stored calibration data and both calibrations are applied to optical sensor data. The results may be presented to the user to confirm the improvement. Alternatively inverse transformation parameters may be determined for both calibrations and used to predict positions of the keypoint elements within the optical sensor data. These predictions may be compared with the actual detections of the keypoint elements within the optical sensor data. For both predictions deviations from the determined actual positions may be indicated, in order to confirm the improvement. Eventually, the updated calibration may be activated in response to an approval by the operator.

Otherwise, a notification may be generated to check the calibrations. This notification may, e.g., be sent to a field service responsible for maintaining the medical imaging system. In yet another example, the updated calibration may be applied automatically, if the test is passed.

The keypoint detection module may be made robust against random obstructions, since a typical patient table may be covered with mattresses, paddings, blankets, coil interfaces and other material. For example, the synthetic training data used to train the keypoint detection module may be supplemented with such random obstructions. The resulting robustness may enable a regularly checking of the validity of an existing calibration during normal clinical usage.

In another example, the keypoint detection module is trained to determine all three coordinate values of the keypoint elements instead of only two-dimensional positions of the keypoint elements projected onto the sensor plane of the optical sensor system, i.e., into an imaging plane of optical sensor data. Thus, the keypoint detection module may be configured to automatically infer distances of keypoint elements from the sensor plane of the optical sensor system using an appearance of the patient table in the optical sensor data. Furthermore, a height of the patient table may be determined, e.g., the distances of keypoint elements and thus of the patient table may be translated into a height of the patient table. In case of a standard patient table, the table, e.g., does not deform and usually is not rotated relatively to the sensor plane of the optical sensor system, such that the apparent size of the patient table correlates strongly with the distance of the patient table from the sensor plane of the optical sensor system.

For example, the transformation described by the one or more transformation parameters comprises one or more of the following: one or more rotations, one or more translations, one or more distortions, a scaling.

Since the coordinate systems are three-dimensional, there may be up to three rotations around three perpendicular axes, e.g., extending into the three dimensions, and thus up to three corresponding rotation parameters. There may be up to three translations along three perpendicular axes, e.g., extending into the three dimensions, and thus up to three corresponding translation parameters. The number of distortions as well as the number of corresponding distortion parameters may, e.g., independent of the number of dimensions. There may, e.g., be one scaling and a corresponding scaling parameter. In case a scaling may vary locally, this variation may, e.g., be described by the distortions.

For example, the received optical sensor data comprise optical sensor data of the patient table positioned in a position relative to the optical sensor system, for which a depth map descriptive of the distances of the detected keypoint elements from the sensor plane of the optical sensor system is received. The third vertical coordinate values of the detected keypoint elements are determined using the depth map.

Examples may have the beneficial effect, that the third vertical coordinate values of the detected keypoint elements in the first coordinate system may be read off the depth map.

For example, the method further comprises receiving first reference values of horizontal distances between the detected keypoint elements of the patient table determined in first optical sensor reference data. The first optical sensor reference data comprises optical sensor data of the patient table positioned in a lower first reference position with first vertical reference distances of the detected keypoint elements from the sensor plane of the optical sensor system. Second reference values of horizontal distances between the detected keypoint elements of the patient table determined in second optical sensor reference data are received. The second optical sensor reference data comprise optical sensor data of the patient table positioned in an upper second reference position with second vertical reference distances of the detected keypoint elements from the sensor plane of the optical sensor system.

The determining of the third vertical coordinate values of the detected keypoint elements comprises determining values of horizontal distances between the detected keypoint elements of the patient table using the received optical data. The third vertical coordinate values are estimated using the determined values of horizontal distances, the received first reference values of horizontal distances and the first vertical reference distances, as well as the received second reference values of horizontal distances and the second vertical reference distances.

Example may have the beneficial effect that the third vertical coordinate values within the first coordinate system may be determined using horizontal distances between the detected keypoint elements, which are compared with reference values of the horizontal distances for known vertical reference distances. The third vertical coordinate values may, e.g., be determined using interpolation.

For example, the lower first reference position is a lower minimum position of the patient table. The upper second reference position is an upper maximum position of the patient table. The estimating of the third vertical coordinate values comprises an interpolation of the third vertical coordinate values.

Using a lower minimum position and an upper maximum position as reference positions may have the beneficial effect that these positions are well defined and can easily be reproduced by moving the patient table into the respective extreme positions. Furthermore, all other possible positions of the patient table are arranged between these two extreme positions. Thus, all other possible positions the same approach may be used to determine the third vertical coordinate values of the keypoint elements for the respective position. For example, transformation parameters for these different positions of the patient table may be determined and used to determine transformation parameters for the transformation from the first coordinate system to the second coordinate system, e.g., as mean values of the one or more transformation parameters for the different positions of the patient table.

For example, the received optical sensor data comprises optical sensor data of the patient table in a first horizonal position and optical sensor data of the patient table in a second horizonal position. The first horizontal positions and second horizontal position of the patient table are spaced apart from each other by a known distance. The detecting of the keypoint elements within the optical sensor data comprises detecting the keypoint elements within the optical sensor data of the patient table in the first horizonal position and detecting the keypoint elements within the optical sensor data of the patient table in the second horizonal position. The determining of the third vertical coordinate values of the detected keypoint elements comprises triangulation using positions of the keypoint elements detected within the optical sensor data of the patient table in the first horizonal position and positions of the keypoint elements detected within the optical sensor data of the patient table in the second horizonal position.

Example may have the beneficial effect, that the third vertical coordinate values of the detected keypoint elements may be determined using a pseudo-stereo approach based on a triangulation. By using optical sensor data of two different horizonal positions of the patient table with a known distance between the two different horizonal positions the third vertical coordinate values may be determined using triangulation similar to a stereo approach with two optical sensors. Such a pseudo-stereo approach even works with for a single optical sensor of the optical sensor system.

Since the patient table and optical sensors system may in general be aligned up to a few degrees, a small required travel horizontally between the first and second horizonal position will lead to negligible error in the third vertical coordinate direction.

For example, the optical sensor system comprises at least two optical sensors arranged spaced apart from each other with a known fixed baseline. The received optical sensor data comprise first optical sensor data acquired using a first optical sensor of the at least two optical sensors and second optical sensor data acquired using a second optical sensor of the at least two optical sensors. The detecting of the keypoint elements within the optical sensor data comprises detecting the keypoint elements within the first optical sensor data and detecting the keypoint elements within the second optical sensor data. The determining of the third vertical coordinate values of the detected keypoint elements comprises triangulation using positions of the keypoint elements detected within the first optical sensor data and positions of the keypoint elements detected within the second optical sensor data.

Example may have the beneficial effect, that the third vertical coordinate values of the detected keypoint elements may be determined using a stereo approach based on a triangulation. Using at least two optical sensors arranged spaced apart from each other with a known fixed baseline, distances of keypoint elements may be determined using angles under which the at least two optical sensors see the respective keypoint elements by using trigonometry. The angles may be determined using the positions of the keypoint elements detected within the first and second optical sensor data. When determining a third vertical coordinate value for a keypoint element, the keypoint element forms a third point of a triangle comprising the at least two optical sensors as the first and second points with one known side, i.e., the baseline, and two known angles determined using the optical sensor data.

For example, the keypoint detection module is configured, in addition to detecting the keypoint elements, to output the third vertical coordinate values of the detected keypoint elements in response receiving the optical sensor data, the determining of the third vertical coordinate values of the detected keypoint elements comprising using the keypoint detection module.

Example may have the beneficial effect, that the keypoint detection module may be configured to directly determine the third vertical coordinate values of the detected keypoint elements, without requiring additional input besides the optical sensor data received.

For example, the keypoint elements of the patient table are distributed over a surface of patient table. For example, the keypoint elements may be elements distributed across the surface on grid points of an imaginary grid laid over the respective surface.

The surface may, e.g., be an upper surface of the patient table. The optical sensor system may, e.g., be arranged above the patient table. The optical sensor system may, e.g., orientated to look vertically downwards onto the upper surface of the patient table. The upper surface may, e.g., be provided with and/or comprise a reclining surface.

For example, the keypoint elements of the patient table are distributed along a contour line of the patient table. The contour line may, e.g., be a contour line of an upper surface of the patient table. Using keypoint elements of the patient table are distributed along a contour line of the patient table may have the beneficial effect, that a likelihood of the keypoint elements being covered, e.g., by a mattress, padding, coil interface or other material arranged on the patient table, may be comparably low. Also, a likelihood of the keypoint elements being covered by a patient lying on the upper surface, e.g., a reclining surface, of the patient table may be comparably low in this case.

For example, the calibration is executed in response to receiving a calibration request.

For example, the calibration is executed automatically in response to receiving an indication for a need of a calibration. For example, the calibration is executed automatically in a preemptively manner. For example, the calibration is executed as a part of a method for checking a current calibration.

For example, the method further comprises checking the calibration. The checking of the calibration comprises determining within the first coordinate system coordinate values of positions of keypoint elements detected within optical sensor test data acquired using the optical sensor system. The optical sensor test data comprises optical sensor data of the patient table positioned in a test position. Coordinate values of the positions of the keypoint elements within the second coordinate system for the patient table positioned in the test position are received. The coordinate values of the first and second coordinate system are compared using the determined one or more transformation parameters for a transformation between the first and second coordinate system. In response to detecting a deviation between the compared coordinate values exceeding a predefined threshold, a re-calibration is applied. The applying of the re-calibration comprises initiating another calibration to determine one or more replacement transformation parameters or using one or more other previously determined transformation parameters as one or more replacement transformation parameters.

Example may have the beneficial effect that a calibration may be checked, whether it is still valid or of sufficient preciseness. In case a detection of de-calibration, i.e., an insufficiency of the current calibration, a re-calibration may be applied. This applying of the re-calibration may, e.g., comprise initiating another calibration to determine one or more replacement transformation parameters. Alternatively, applying of the re-calibration may, e.g., comprise using one or more other previously determined transformation parameters as one or more replacement transformation parameters. Thus, the calibration, i.e., the transformation parameters, may be kept up-to-date. A de-calibration may, e.g., be caused by vibrations of one or more components of the optical sensor system and/or the medical imaging system, which may result in a shift of the alignment of the optical sensor system with the medical imaging system.

For example, the method further comprises receiving in addition to the optical sensor data used for the calibration a plurality of additional optical sensor data acquired using the optical sensor system. The additional optical sensor data comprise additional optical sensor data of the patient table. The keypoint elements are detected within the additional optical sensor data using the keypoint detection module. The optical sensor data used for the calibration are selected from a set of received optical sensor data comprising in addition to the selected optical sensor data the additional optical sensor data. The selecting comprises checking that confidence values determined for a predefined number of the keypoint elements detected within the selected optical sensor data exceed a predefined threshold.

Example may have the beneficial effect, that the optical sensor data used for the calibration is selected from a plurality of optical sensor data received. When selecting the respective optical sensor data, it is ensured that the confidence values determined for a predefined number of the keypoint elements detected within the selected optical sensor data exceed a predefined threshold. Thus, it may be ensured that the optical sensor data used for the calibration is of a sufficient quality, in order to ensure a sufficient quality of the resulting calibration. For example, it may be required that the confidence values determined for all the keypoint elements detected within the selected optical sensor data exceed the predefined threshold.

For example, the method further comprises providing training datasets for training the keypoint detection module. The training datasets comprise optical sensor training data and optical sensor training data with keypoint elements of the patient table labeled within the optical sensor training data. Training the keypoint detection module for detecting as output the labeled keypoint elements of the patient table within the optical sensor training data of the training datasets in response to receiving the optical sensor training data of the respective training dataset.

Examples may have the beneficial effect that the keypoint detection module may be trained to detect keypoint elements of the patient table within the optical sensor data.

For example, the labels comprise two-dimensional horizontal coordinate values of the respective keypoint elements of the patient table within the first coordinate system. The two-dimensional horizontal coordinate values may be descriptive of positions of the respective keypoint elements in planes parallel to a sensor plane of the optical sensor system. The training may further comprise training the keypoint detection module for determining as output the two-dimensional horizontal coordinate values of the labeled keypoint elements of the patient table within the optical sensor training data of the training datasets in response to receiving the optical sensor training data of the respective training dataset.

Examples may have the beneficial effect that the keypoint detection module may in addition be trained to determine two-dimensional horizontal coordinate values of the detected keypoint elements within the first coordinate system.

For example, the labels further comprise third vertical coordinate values of the respective keypoint elements within the first coordinate system. The third vertical coordinate values are descriptive of distances of the positions of the respective keypoint elements from the sensor plane of the optical sensor system. The training may further comprise training the keypoint detection module for determining as output the third vertical coordinate values of the labeled keypoint elements of the patient table within the optical sensor training data of the training datasets in response to receiving the optical sensor training data of the respective training dataset.

Examples may have the beneficial effect that the keypoint detection module may in addition be trained to determine third vertical coordinate values of the detected keypoint elements within the first coordinate system.

For example, the keypoint detection module may be trained for determining confidence levels. These confidence levels may, e.g., be estimations trained using a loss function quantifying a deviation of the detections of the keypoint elements from a ground truth for the keypoint elements provided by the optical training data. The confidence levels may, e.g., be functions of an output of the keypoint detection module. A maximum, minimum, mean or integral of the output of the detection module may be examples of quantities, which may be used to derive a confidence metric within a training distribution provided by a plurality of optical training data.

In another aspect, the invention provides for a computer program comprising machine executable instructions for calibrating a first coordinate system of a field of view of an optical sensor system. The calibrating comprises a registering of the first coordinate system with a second coordinate system of a medical imaging system using a keypoint detection module configured for detecting as output keypoint elements of a patient table of the medical imaging system within optical sensor data in response to receiving the optical sensor data, which is acquired using the optical sensor system. The optical sensor system is configured for a supervision of the medical imaging system.

Execution of the machine executable instructions by a processor of a computing device causes the processor to control the computing device to execute a method for the calibrating of the first coordinate system of the field of view of the optical sensor system.

The method comprises receiving optical sensor data acquired using the optical sensor system. The received optical sensor data comprises optical sensor data of the patient table.

The keypoint elements are detected within the optical sensor data using the keypoint detection module.

Using the optical sensor data, two-dimensional horizontal coordinate values of the detected keypoint elements within the first coordinate system are determined. The two-dimensional horizontal coordinate values are descriptive of positions of the detected keypoint elements in planes parallel to a sensor plane of the optical sensor system.

Third vertical coordinate values of the detected keypoint elements within the first coordinate system are determined. The third vertical coordinate values are descriptive of distances of the positions of the detected keypoint elements from the sensor plane of the optical sensor system.

Three-dimensional coordinates values descriptive of the positions of the detected keypoint elements within the second coordinate system of the medical imaging system are received.

One or more transformation parameters for a transformation from the first coordinate system to the second coordinate system are determined using the coordinate values descriptive of the positions of the detected keypoint elements within the first coordinate system and the coordinate values descriptive of the positions of the detected keypoint elements within the second coordinate system.

For example, the computing device may be configured for executing any of the aforementioned examples of a method for calibrating a first coordinate system of a field of view of an optical sensor system.

In another aspect, the invention provides for a computing device for calibrating a first coordinate system of a field of view of an optical sensor system. The calibrating comprises a registering of the first coordinate system with a second coordinate system of a medical imaging system. The computing device comprises a keypoint detection module configured for detecting as output keypoint elements of a patient table of the medical imaging system within optical sensor data in response to receiving the optical sensor data, which is acquired using the optical sensor system. The optical sensor system is configured for a supervision of the medical imaging system.

The computing device comprises a processor and a memory with machine executable instructions stored therein. Execution of the machine executable instructions by the processor of the computing device causes the processor to control the computing device to execute a method for the calibrating of the first coordinate system of the field of view of the optical sensor system.

The method comprises receiving optical sensor data acquired using the optical sensor system. The received optical sensor data comprises optical sensor data of the patient table.

The keypoint elements are detected within the optical sensor data using the keypoint detection module.

Using the optical sensor data, two-dimensional horizontal coordinate values of the detected keypoint elements within the first coordinate system are determined. The two-dimensional horizontal coordinate values are descriptive of positions of the detected keypoint elements in planes parallel to a sensor plane of the optical sensor system.

Third vertical coordinate values of the detected keypoint elements within the first coordinate system are determined. The third vertical coordinate values are descriptive of distances of the positions of the detected keypoint elements from the sensor plane of the optical sensor system.

Three-dimensional coordinates values descriptive of the positions of the detected keypoint elements within the second coordinate system of the medical imaging system are received.

One or more transformation parameters for a transformation from the first coordinate system to the second coordinate system are determined using the coordinate values descriptive of the positions of the detected keypoint elements within the first coordinate system and the coordinate values descriptive of the positions of the detected keypoint elements within the second coordinate system.

For example, the computing device may be configured for executing any of the aforementioned examples of a method for calibrating a first coordinate system of a field of view of an optical sensor system.

In another aspect, the invention provides for a medical imaging system The medical imaging system comprises the computing device of any of the aforementioned examples, an optical sensor system configured for a supervision of the medical imaging system, and a patient table. The medical imaging system is one of the following: a magnetic resonance imaging system, a computed tomography system, an X-ray imaging system.

The technology described herein may be applied to the use of optical sensors in various medical applications, i.e.,

for various medical imaging systems. The medical imaging system, like e.g., an MRI system, may be comprised by a radiation therapy (TR) system. The X-ray imaging system may, e.g., be part of an image guided therapy (IGT) system. The X-ray imaging system may, e.g., be a diagnostic X-ray (DXR) system.

It is understood that one or more of the aforementioned embodiments of the invention may be combined as long as the combined embodiments are not mutually exclusive.

As will be appreciated by one skilled in the art, aspects of the present invention may be embodied as an apparatus, method, or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid-state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

The term 'machine learning' (ML) refers to a computer algorithm used to extract useful information from training datasets by building probabilistic models, which are referred to as machine learning modules or models, in an automated way. A machine learning module may also be referred to as a predictive model. Machine learning algorithms build a mathematical model based on sample data, known as 'training data', in order to make predictions or decisions without being explicitly programmed to perform the respective task. The machine learning module may be performed using a learning algorithm such as supervised or unsupervised learning. The machine learning module may be based on various techniques such as clustering, classification, linear regression, reinforcement, self-learning, support vector machines, neural networks, etc. A machine learning module may, e.g., be a data structure or program such as a neural network, in particular a convolutional neural network, a support vector machine, a decision tree, a Bayesian network etc. The machine learning module may be adapted, i.e., trained to predict an unmeasured value. The trained machine learning module may thus be enabled to predict the unmeasured value as output from other known values as input.

A machine learning module to be trained may, e.g., be an untrained machine learning module, a pre-trained machine learning module or a partially trained machine learning module. The machine learning module being trained may be an untrained machine learning module, which is trained from scratch. Alternatively, the machine learning module being trained may be a pre-trained or partially trained machine learning module. In general, it may not be necessary to start with an untrained machine learning module, e.g., in deep learning. For example, one may start with a pre-trained or partially trained machine learning module. The pre-trained or partially trained machine learning module may have been pre-trained or partially trained for the same or a similar task. Using a pre-trained or partially trained machine learning may, e.g., enable a faster training of the trained machine learning module to be trained, i.e., the training may converge faster. For example, transfer learning may be used for training a pre-trained or partially trained machine learning module. Transfer learning refers to a machine learning process, which rather than starting the learning process from scratch starts from patterns that have been previously learned, when solving a different problem. This way previous learnings may, e.g., be leveraged, avoiding to start from scratch. A pre-trained machine learning module is a machine learning module that was trained previously, e.g., on a large benchmark dataset to solve a problem similar to the one to be solved by the additional learning. In case of a pre-trained machine learning module a previous learning process has been completed successfully. A partially trained machine learning module is a machine learning module, which has been partially trained, i.e., the training process may not have been completed yet. A pre-trained or partially machine learning module may, e.g., be import and trained to be used for the purposes disclosed herein.

BRIEF DESCRIPTION OF THE DRAWINGS

In the following preferred embodiments of the invention will be described, by way of example only, and with reference to the drawings in which:

Fig. 1 illustrates an exemplary method for calibrating a first coordinate system of a field of view of an optical sensor system;
Fig. 2 illustrates another exemplary method for calibrating a first coordinate system of a field of view of an optical sensor system;
Fig. 3 illustrates an exemplary method for estimating third vertical coordinate values;
Fig. 4 illustrates an exemplary method for checking a calibration;
Fig. 5 illustrates an exemplary method for selecting optical sensor data to be used for a calibration;
Fig. 6 illustrates an exemplary method for training a keypoint detection module;
Fig. 7 illustrates exemplary optical sensor training data for training a keypoint detection module;
Fig. 8 illustrates an exemplary detection of keypoint elements in optical sensor data;
Fig. 9 illustrates another exemplary detection of keypoint elements in optical sensor data;
Fig. 10 illustrates another exemplary detection of keypoint elements in optical sensor data;
Fig. 11 illustrates an exemplary computing device for calibrating a first coordinate system of a field of view of an optical sensor system; and
Fig. 12 illustrates an exemplary medical imaging system comprising a computing device.

DETAILED DESCRIPTION OF EMBODIMENTS

Like numbered elements in these figures are either equivalent elements or perform the same function. Elements which have been discussed previously will not necessarily be discussed in later figures if the function is equivalent.

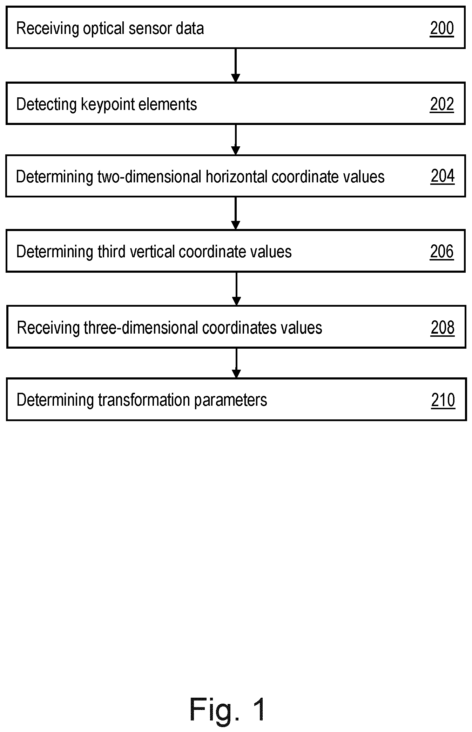

Fig. 1 illustrates a method for calibrating a first coordinate system of a field of view of an optical sensor system. The calibrating comprises a registering of the first coordinate system with a second coordinate system of a medical imaging system using a computing device. The computing device comprises a keypoint detection module configured for detecting as output keypoint elements of a patient table of the medical imaging system within optical sensor data in response to receiving the optical sensor data, which is acquired using the optical sensor system. The optical sensor system is configured for a supervision of the medical imaging system.

In block 200, optical sensor data acquired using the optical sensor system is received. The received optical sensor data comprises optical sensor data of the patient table.

In block 202, the keypoint elements are detected within the optical sensor data using the keypoint detection module.

In block 204, the optical sensor data is used for determining two-dimensional horizontal coordinate values of the detected keypoint elements within the first coordinate system. The two-dimensional horizontal coordinate values are descriptive of positions of the detected keypoint elements in planes parallel to a sensor plane of the optical sensor system.

In block 206, third vertical coordinate values of the detected keypoint elements within the first coordinate system are determined. The third vertical coordinate values are descriptive of distances of the positions of the detected keypoint elements from the sensor plane of the optical sensor system. The third vertical coordinate values may, e.g., be determined according to any of the aforementioned examples of a depth sensing method, like, e.g., using a registered depth image, using apparent lateral distances between the keypoint elements, using a stereo approach with at least two optical sensors, using a pseudo-stereo approach with different positions of the patient table, and/or using a keypoint detection module trained to determine also the third vertical coordinate values.

In block 208, three-dimensional coordinates values descriptive of the positions of the detected keypoint elements within the second coordinate system of the medical imaging system are received.

In block 210, one or more transformation parameters for a transformation from the first coordinate system to the second coordinate system are determined. For determining the one or more transformation parameters, the coordinate values descriptive of the positions of the detected keypoint elements within the first coordinate system and the coordinate values descriptive of the positions of the detected keypoint elements within the second coordinate system are used.

For example, the determining of transformation parameters may be executed for different position of the patient table and the resulting transformation parameters for the different positions of the patient table used to determine one or more transformation parameters for the transformation from the first coordinate system to the second coordinate system, e.g., as mean values of the one or more transformation parameters for the different positions of the patient table.

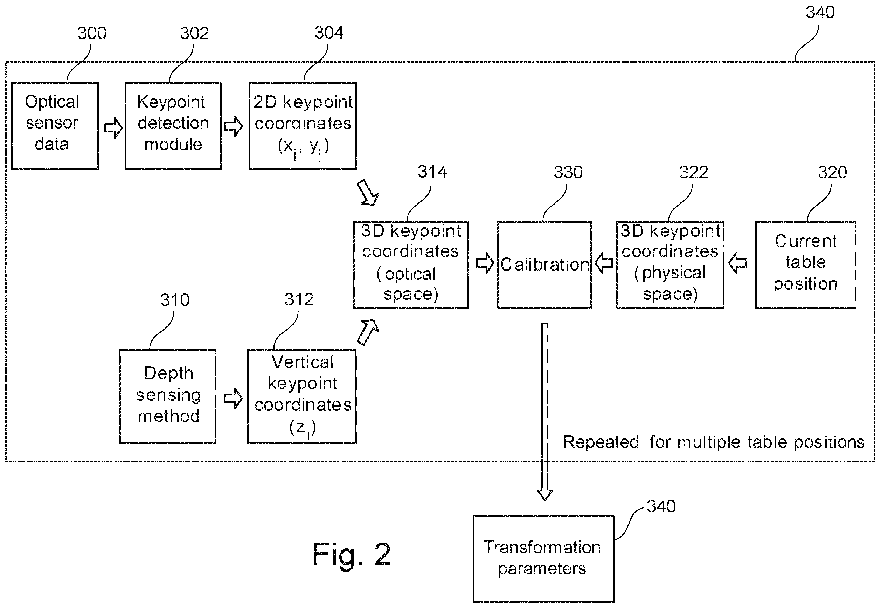

Fig. 2 illustrates another method for calibrating a first coordinate system of a field of view of an optical sensor system. The calibrating comprises a registering of the first coordinate system with a second coordinate system of a medical imaging system using a computing device. The computing device comprises a keypoint detection module configured for detecting as output keypoint elements of a patient table of the medical imaging system within optical sensor data in response to receiving the optical sensor data, which is acquired using the optical sensor system. The optical sensor system is configured for a supervision of the medical imaging system.

In block 300, optical sensor data acquired using the optical sensor system is received. The received optical sensor data comprises optical sensor data of the patient table. In block 302, the keypoint detection module is used to detect keypoint elements within the received optical sensor data. In block 304, two-dimensional horizontal coordinate values of the detected keypoint elements within the first coordinate system are determined. The two-dimensional horizontal coordinate values are descriptive of positions of the detected keypoint elements in planes parallel to a sensor plane of the optical sensor system.

In block 310, a depth sensing method is applied to determine third vertical coordinate values of the detected keypoint elements within the first coordinate system. In block 312, the third vertical coordinate values are determined. The third vertical coordinate values are descriptive of distances of the positions of the detected keypoint elements from the sensor plane of the optical sensor system. The third vertical coordinate values may, e.g., be determined according to any of the aforementioned examples of a depth sensing method, like, e.g., using a registered depth image, using apparent lateral distances between the keypoint elements, using a stereo approach with at least two optical sensors, using a pseudo-stereo approach with different positions of the patient table, and/or using a keypoint detection module trained to determine also the third vertical coordinate values. In block 314, the three-dimensional coordinate values, i.e., the first, second, and third coordinate values are provided.

In block 320, a current position of the patient table is determined. The determined position of the patient table within the second coordinate system of the medical imaging system is used for determine three-dimensional coordinates values descriptive of the positions of the detected keypoint elements within the second coordinate system of the medical imaging system.

In block 330, the coordinate values descriptive of the positions of the detected keypoint elements within the first coordinate system provided in block 314 and the coordinate values descriptive of the positions of the detected keypoint elements within the second coordinate system determined in block 330 are used for a calibration. The calibration comprises determined one or more transformation parameters for a transformation from the first coordinate system to the second coordinate system.

Blocks 300 to 330 comprised by block 340 may, e.g., be repeated for multiple different patient table positions. The resulting transformation parameters of the different repetition of block 340 may be combined with each other, e.g., averaged. In block 340 the resulting transformation parameter are provided, e.g., as an output.

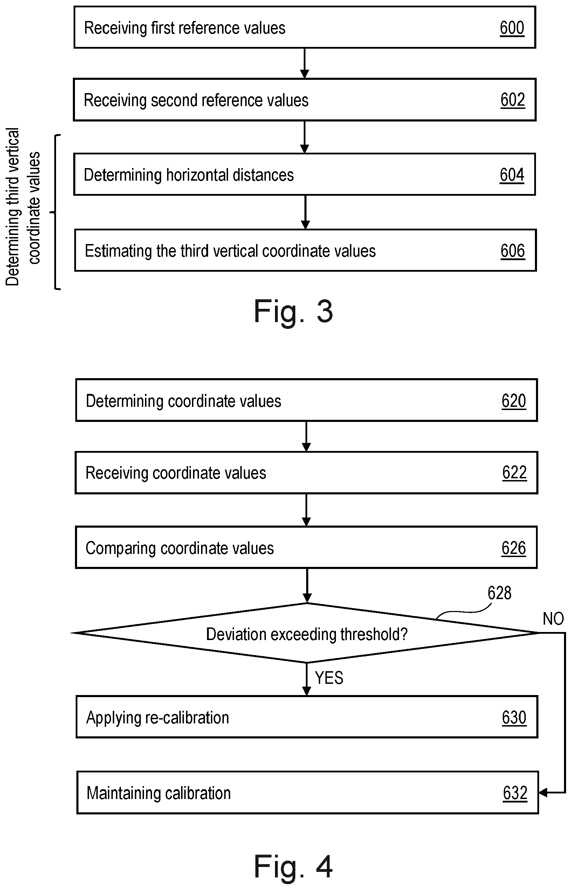

Fig. 3 illustrates a method for determining third vertical coordinate values of the detected keypoint elements. The method of Fig. 3 may, e.g., be used for determining the third vertical coordinate values of the detected keypoint elements in block 210 of the method of Fig. 1 and/or in block 312 of Fig. 2.

In block 600, first reference values of horizontal distances between the detected keypoint elements of the patient table determined in first optical sensor reference data are received. The first optical sensor reference data comprises optical sensor data of the patient table positioned in a lower first reference position with first vertical reference distances of the detected keypoint elements from the sensor plane of the optical sensor system. In block 602, second reference values of horizontal distances between the detected keypoint elements of the patient table determined in second optical sensor reference data are received. The second optical sensor reference data comprise optical sensor data of the patient table positioned in an upper second reference position with second vertical reference distances of the detected keypoint elements from the sensor plane of the optical sensor system.

The third vertical coordinate values are determined using an estimation, e.g., an interpolation. The determining of the third vertical coordinate values of the detected keypoint elements comprises blocks 604 and 606. In block 604, values of horizontal distances between the detected keypoint elements of the patient table are determined using the received optical data. In block 606, the third vertical coordinate values are estimated. For estimating the third vertical coordinate values, the determined values of horizontal distances, the received first reference values of horizontal distances and the first vertical reference distances, as well as the received second reference values of horizontal distances and the second vertical reference distances are used.

Fig. 4 illustrates a method for checking a calibration of a first coordinate system of a field of view of an optical sensor system. In block 620, within the first coordinate system coordinate values of positions of keypoint elements detected within optical sensor test data acquired using the optical sensor system are determined. The optical sensor test data comprises optical sensor data of the patient table positioned in a test position. In block 622, coordinate values of the positions of the keypoint elements within the second coordinate system for the patient table positioned in the test position are received.

In block 624, the coordinate values of the first and second coordinate system are compared using the determined one or more transformation parameters for a transformation between the first and second coordinate system. In block 626, it is check, whether a deviation between the compared coordinate values exceeds a predefined threshold. In case it is detected in block 626, that the deviation between the compared coordinate values exceeds a predefined threshold, the method continues in block 628 with applying a re-calibration. The applying of the re-calibration comprises initiating another calibration to determine one or more replacement transformation parameters or using one or more other previously determined transformation parameters as one or more replacement transformation parameters. In case it is detected in block 626, that the deviation between the compared coordinate values does not exceed the predefined threshold, the method continues in block 630 with maintaining the current calibration.

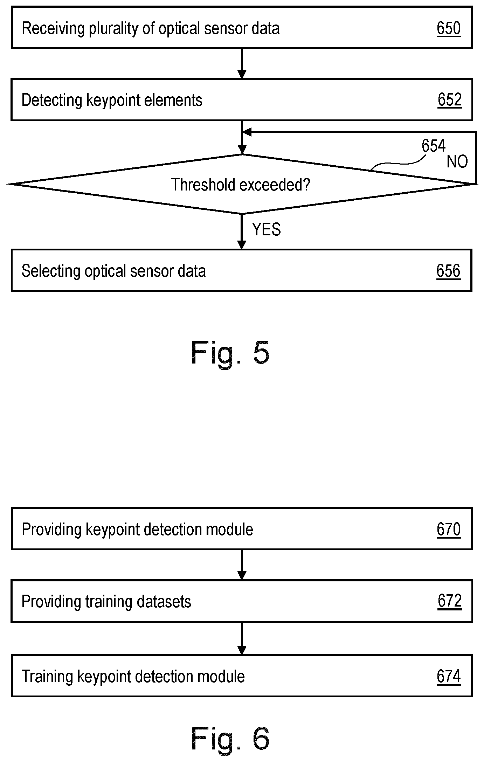

Fig. 5 illustrates a method for selecting optical sensor data to be used for a calibration, e.g., a calibration according to the method of Fig. 1. In block 650, a plurality of optical sensor data acquired using the optical sensor system is received. The plurality of optical sensor data comprises a plurality of optical sensor data of the patient table. In block 652, keypoint elements are detected within the received optical sensor data using the keypoint detection module. In block 654, the received plurality of optical sensor data is checked, whether confidence values determined for a predefined number of the keypoint elements detected within optical sensor data of the plurality of optical sensor data exceeds a predefined threshold. In case, it is determined that a predefined number of the keypoint elements detected within optical sensor data being checked exceeds the predefined threshold, the respective optical sensor data is selected in block 656 to be used for the calibration. In case, it is determined that a predefined number of the keypoint elements detected within optical sensor data being checked exceeds the predefined threshold, the method continues in block 654 with checking next optical sensor data of the plurality of optical sensor data.

Fig. 6 illustrates a method for training the keypoint detection module to detect keypoint elements within optical sensor data. In block 670, the keypoint detection module to be trained is provided. In block 672, training datasets for training the keypoint detection module are provided. The training datasets comprise optical sensor training data and optical sensor training data with keypoint elements of the patient table labeled within the optical sensor training data. The providing of the training datasets, e.g., comprises generating the optical sensor training data comprised by the training datasets as synthetic optical sensor training data using a three-dimensional digital scale model of the patient table. In block 674, the keypoint detection module is trained for detecting as output the labeled keypoint elements of the patient table within the optical sensor training data of the training datasets in response to receiving the optical sensor training data of the respective training dataset.

For example, the labels optical sensor training data may comprise two-dimensional horizontal coordinate values of the respective keypoint elements of the patient table within the first coordinate system. The two-dimensional horizontal coordinate values may be descriptive of positions of the respective keypoint elements in planes parallel to a sensor plane of the optical sensor system. The training may further comprise training the keypoint detection module for determining as output the two-dimensional horizontal coordinate values of the labeled keypoint elements of the patient table within the optical sensor training data of the training datasets in response to receiving the optical sensor training data of the respective training dataset.

For example, the labels may further comprise third vertical coordinate values of the respective keypoint elements within the first coordinate system. The third vertical coordinate values are descriptive of distances of the positions of the respective keypoint elements from the sensor plane of the optical sensor system. The training may further comprise training the keypoint detection module for determining as output the third vertical coordinate values of the labeled keypoint elements of the patient table within the optical sensor training data of the training datasets in response to receiving the optical sensor training data of the respective training dataset.

For example, the keypoint detection module may be trained for determining confidence levels. These confidence levels may, e.g., be estimations trained using a loss function quantifying a deviation of the detections of the keypoint elements from a ground truth for the keypoint elements provided by the optical training data. The confidence levels may, e.g., be functions of an output of the keypoint detection module. A maximum, minimum, mean or integral of the output of the detection module may be examples of quantities, which may be used to derive a confidence metric within a training distribution provided by a plurality of optical training data.

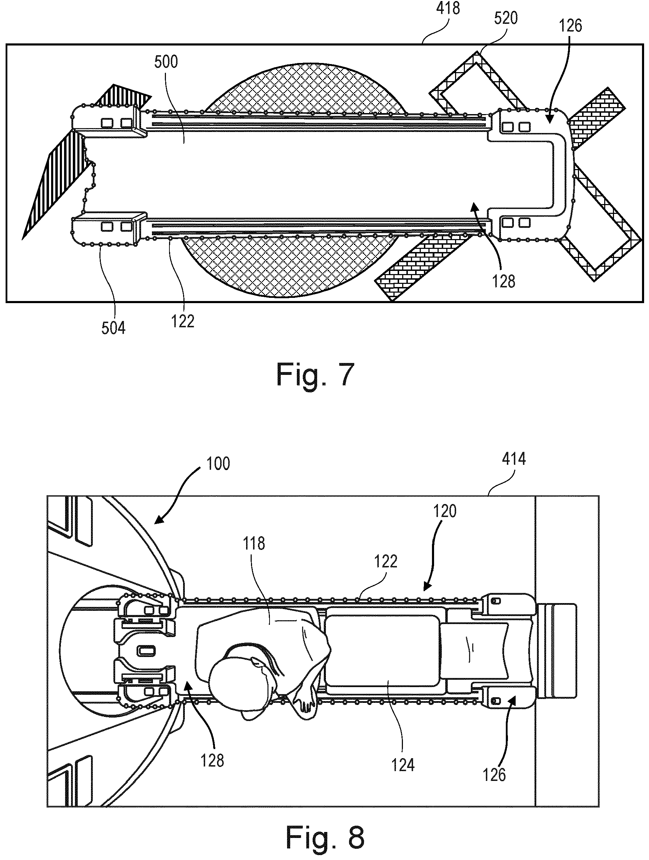

Fig. 7 illustrates exemplary optical sensor training data 418 for training a keypoint detection module to detect keypoint elements 122 of a patient table. The optical sensor training data 418 is synthetic training data generated using a three-dimensional digital scale model 500 of the patient table. The three-dimensional digital scale model 500 comprises an upper surface 126 with a reclining surface 128. The keypoint elements 122 are, e.g., distributed on the upper surface 126. The keypoint elements 122 are, e.g., distributed along a contour line of the patient table circumferentially around the reclining surface 128. The optical sensor training data 418 may, e.g., be generated by adding random image elements 520. The random image elements 520 may, e.g., be added in the background of the three-dimensional digital scale model 500. For example, the random image elements 520 may also be added, at least partially, over the three-dimensional digital scale model 500 as random obstructions, such that at least some of the keypoint elements 122 are covered by the random image elements 520. Thereby, the keypoint detection module may be made robust against random obstructions, since a typical patient table may be covered additional material, like, e.g., with mattresses, paddings, blankets, coil interfaces and other material.

In addition, the optical sensor training data 418 comprises labels 504 labeling the keypoint elements 122 within the optical sensor training data 418. For a training of the keypoint detection module, e.g., additional optical sensor training data 418 may be provided without labels 504 of the keypoint elements 122 as input for the keypoint detection module during training. The keypoint detection module is trained to detect in the optical sensor training data 418 may be provided without labels 504 the keypoint elements 122, which are identified by the labels 504 of the labeled optical sensor training data 418.

For example, the labels 504 may comprise two-dimensional horizontal coordinate values of the respective keypoint elements 122 of the patient table within the first coordinate system. The two-dimensional horizontal coordinate values may be descriptive of positions of the respective keypoint elements in planes parallel to a sensor plane of the optical sensor system. Thus, the optical sensor training data 418 may, e.g., also be used for training the keypoint detection module for determining the two-dimensional horizontal coordinate values of the labeled keypoint elements 122 of the patient table as output.

For example, the labels 504 may further comprise third vertical coordinate values of the respective keypoint elements 122 within the first coordinate system. The third vertical coordinate values are descriptive of distances of the positions of the respective keypoint elements 122 from the sensor plane of the optical sensor system. Thus, the optical sensor training data 418 may, e.g., also be used for training the keypoint detection module for determining the third vertical coordinate values in addition to the two-dimensional horizontal coordinate values of the labeled keypoint elements 122 of the patient table as output.

Fig. 8 illustrates an exemplary detection of keypoint elements 122 in optical sensor data 414 of a patient table 120. The patient table 120 is part of a medical imaging system, e.g., an MRI system. The patient table 120 comprises an upper surface 126 with a reclining surface 128. The reclining surface is configured for a patient to lie thereon. The keypoint elements 122 of the patient table 120 are, e.g., distributed on the upper surface 126. The keypoint elements 122 of the patient table 120 are, e.g., distributed along a contour line of the patient table circumferentially around the reclining surface 128. Furthermore, additional material 124, like, e.g., mattresses, paddings, blankets, coil interfaces and other material, may be arranged on the patient table 120. The keypoint detection module is configured to detect the keypoint elements 122 in the optical sensor data 414.

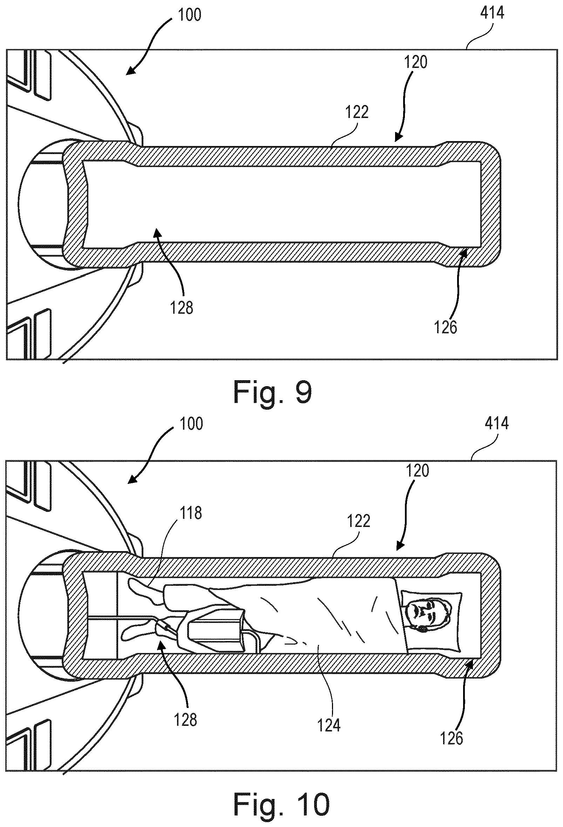

Fig. 9 illustrates another exemplary detection of keypoint elements 122 in optical sensor data 414. The optical sensor data 414 of Fig. 9 comprises an empty patient table 120 of a medical imaging system 100 with an upper surface 126 with a reclining surface 128. The detected keypoint elements 122 are represented as gaussian probability heatmaps, e.g., with varying color overlaid over a table image. A size of the individual heatmaps may be such that neighboring keypoint elements have overlapping signal tails. Due to the overlapping, the band-like structure schematically shown in Fig. 9 is formed, which represents the detected keypoint elements 122.

Fig. 10 illustrates another exemplary detection of keypoint elements 122 in optical sensor data 414. The optical sensor data 414 of Fig. 10 corresponds to the optical sensor data 414 of Fig. 9, with the only difference, that patient table 120 in Fig. 10 is not empty. In Fig. 10, a patient is lying on the patient table 120. Furthermore, additional material 124, like, e.g., mattresses, paddings, blankets, coil interfaces and other material, are arranged on the patient table 120. This additional material 124 may, e.g., cover, at least partially, some of the keypoint elements 122. Nevertheless, as indicated by the band-like structure schematically shown in Fig. 10, the keypoint detection module is configured to robustly detect the keypoint elements 122 in the optical sensor data 414. The optical sensor data 414 illustrates an exemplary check performed during clinical use with obstructions confirming valid calibration.

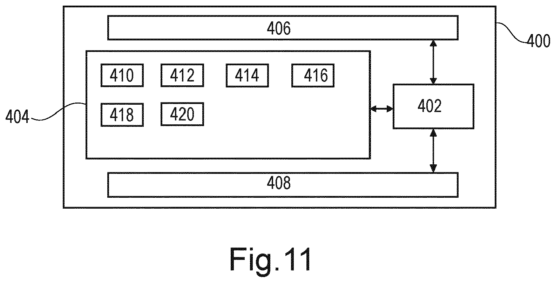

Fig. 11 illustrates an exemplary computing device 400 for calibrating a first coordinate system of a field of view of an optical sensor system. The computing device 400 is shown as comprising a computational component 402. The computational component 402 is intended to represent one or more processors or processing cores or other computational elements. The computational component 402 is shown as being connected to a hardware interface 406 and a memory 404. The hardware interface 406 may enable the computational component 402 to exchange commands and data with other components, e.g., an optical sensor system. The hardware interface 406 may for example enable the computational component 402 to control the optical sensor system to acquire the optical sensor data. The hardware interface 406 may for example further enable the computational component 402 to control a medical imaging system.

The computational system 404 is further shown as being connected to a user interface 408 which may for example enable an operator to control and operate the computing device 400 and via the computing device 400 an optical sensor and/or a medical imaging system. The user interface 408 may, e.g., comprise an output and/or input device enabling a user to interact with the computer 400. The output device may, e.g., comprise a display device configured for displaying magnetic resonance images 426. The input device may, e.g., comprise a keyboard and/or a mouse enabling the user to insert control commands for controlling the computing device 400 and via the computing device 400 the optical sensor and/or the medical imaging system.

The memory 404 is shown as containing machine-executable instructions 410. The machine-executable instructions 410 enable the computational component 402 to perform controlling tasks, such as the optical sensor system, to perform numerical tasks, as well as performing various signal data processing tasks. The machine-executable instructions 410 may, e.g., enable the computational component 402 and thus the computing device 400 to calibrate a first coordinate system of a field of view of an optical sensor system according to the methods of Fig. 1 or Fig. 2. The machine-executable instructions 410 may, e.g., enable the computational component 402 and thus the computing device 400 to further execute the methods of Fig. 3 to 6 and/or to generate synthetic optical sensor training data 418 according to Fig. 7. For example, the instructions 410 may, e.g., enable the computational component 402 and thus the computing device 400 to control a medical imaging system.

The memory 404 is further shown as containing a keypoint detection module 412. The keypoint detection module 412 is configured for detecting keypoint elements of one or more target structures within optical sensor data 414 in response to receiving the optical sensor data 414 from the optical sensor. The keypoint detection module 412 may, e.g., further be configured to determine two-dimensional horizontal coordinate values of the detected keypoint elements within the first coordinate system. The two-dimensional horizontal coordinate values are descriptive of positions of the detected keypoint elements in planes parallel to a sensor plane of the optical sensor system. For example, the keypoint detection module 412 may be configured to determine in addition to the two-dimensional horizontal coordinate values third vertical coordinate values of the detected keypoint elements within the first coordinate system. The third vertical coordinate values are descriptive of distances of the positions of the detected keypoint elements from the sensor plane of the optical sensor system.

The memory 404 is further shown as containing optical sensor data 414. The optical sensor data 414 has been acquired using an optical sensor configured for a supervision of a medical imaging system.

The memory 404 is further shown as containing three-dimensional coordinates values 416 descriptive of the positions of the detected keypoint elements within the second coordinate system of the medical imaging system. Using the coordinate values descriptive of the positions of the detected keypoint elements within the first coordinate system of the optical sensor data 414 and the coordinate values 416 descriptive of the positions of the detected keypoint elements within the second coordinate system, one or more transformation parameters 420 for a transformation from the first coordinate system to the second coordinate system are determined.

The memory 404 may optionally further contain training data 418, e.g., synthetic training data, configured for training the keypoint detection module 412 to detect keypoint elements of one or more target structures within the optical sensor data 414 in response to receiving the optical sensor data 414 from the optical sensor.

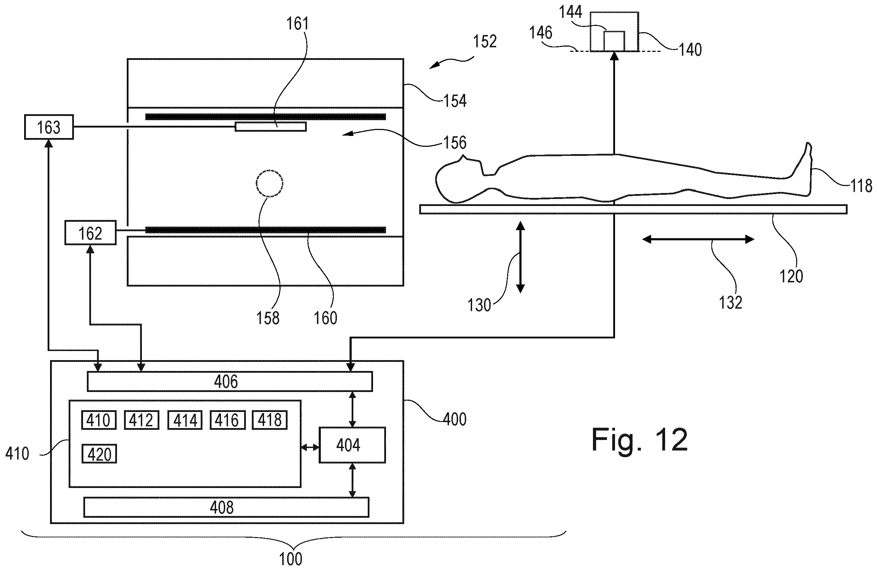

Fig. 12 an exemplary medical imaging system 100 comprising a computing device 400. The computing device 400 is configured for calibrating a first coordinate system of a field of view of an optical sensor system 140. The computing device 400 of Fig. 12 is, e.g., the computing device 400 of Fig. 11.

The medical imaging system 100, e.g., comprises an optical sensor system 140 configured for a supervision of the medical imaging system 100 and a patient table 120. Indicated is also a sensor plane 146 of the optical sensor system 140. The optical sensor system 140 may comprise one or more optical sensors. The medical imaging system 100, e.g., comprises an exemplary magnetic resonance imaging system 152.

Alternatively, the medical imaging system 100 may, e.g., comprise a computed tomography system or an X-ray imaging system. The medical imaging system 100, e.g., with the MRI system 152, may be comprised by a radiation therapy (TR) system. An X-ray imaging system may, e.g., be part of an image guided therapy (IGT) system or the X-ray imaging system may, e.g., be a diagnostic X-ray (DXR) system.

A patient 118 is shown as being supported by a patient table 120. The patient table 120 is movable in at least two spatial directions 130, 132. For example, the patient table 120 is movable in a vertical direction 130 between a lower minimum position and an upper maximum position. For example, the patient table 120 is movable in a horizontal direction 132. By moving the patient table 120 in the vertical direction 132, the patient 118 lying on the patient table 120 is, e.g., moved into a magnet 154 of the MRI system 152. For example, the patient table 120 is movable in three spatial directions.

The MRI system 152 is controlled by the computer 400. The MRI system 152 comprises a magnet 154. The magnet 154 is a superconducting cylindrical type magnet with a bore 156 through it. The use of different types of magnets is also possible. For instance, it is also possible to use both a split cylindrical magnet and a so-called open magnet.

Within the bore 156 of the cylindrical magnet 154 there is an imaging iso-center 158 of MRI system 152. In the imaging iso-center 158, the magnetic field is, e.g., strong and uniform enough to perform magnetic resonance imaging.

Within the bore 156 of the magnet there is also a set of magnetic field gradient coils 160 which is used for acquisition of preliminary magnetic resonance data to spatially encode magnetic spins within the bore 156 of magnet 154. The magnetic field gradient coils 160 are connected to a magnetic field gradient coil power supply 162. The magnetic field gradient coils 160 are intended to be representative. Typically, magnetic field gradient coils 160 contain three separate sets of coils for spatially encoding in three orthogonal spatial directions. The magnetic field gradient power supply 162 supplies current to the magnetic field gradient coils 160. The current supplied to the magnetic field gradient coils 160 is controlled as a function of time and may be ramped or pulsed.

Furthermore, the MRI system 152 may comprise an RF transmitter coil 161 for manipulating the orientations of magnetic spins. The RF transmitter coil 161 may also be referred to as a transmitter antenna. The RF transmitter coil 161 is connected to an RF transmitter 163. It is understood that the RF transmitter coil 161 and the RF transmitter 163 are representative. The RF transmitter coil 161 may have multiple transmitter elements and the RF transmitter 163 may have multiple transmitter channels.

The transmitter 163, the gradient controller 162, the one or more lighting sources 142 the optical and the optical sensor 144 are shown as being connected to the hardware interface 406 of the computer 400. The computing device 400 is intended to represent one or more computational or computing devices. The computing device 400 is configured for acquiring medical imaging data as part of a control system of the medical imaging system 100, e.g., MRI images using the MRI system 152. The computing device 400 is further configured for controlling the one or more light sources 142 to adjust lighting conditions of a medical imaging system 100 during an acquisition of optical sensor data 414 using the optical sensor 144. The optical sensor 144 is configured for a supervision of the medical imaging system 100.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

REFERENCE SIGNS LIST

| | |
|---|---|
| 100 | medical imaging system |
| 118 | patient |
| 120 | patient table |
| 122 | keypoint element |
| 124 | material arranged on patient table |
| 126 | upper surface |
| 128 | reclining surface |
| 130 | vertical direction |
| 132 | horizontal direction |
| 140 | optical sensor system |
| 144 | optical sensor |
| 152 | MRI system |
| 154 | magnet |
| 156 | bore of magnet |
| 158 | imaging iso-center |
| 160 | magnetic field gradient coils |
| 161 | radio-frequency transmitter coil |

162     magnetic field gradient coil power supply
163     transmitter
400     computing device
402     computational component
404     memory
406     hardware interface
408     user interface
410     machine readable instructions
412     keypoint detection module
414     optical sensor data
416     three-dimensional coordinates values
418     training data
420     transformation parameters
500     3D digital scale model
504     label
520     random image element

**Claims**

1.  A method for calibrating a first coordinate system of a field of view of an optical sensor system (140), the calibrating comprising a registering of the first coordinate system with a second coordinate system of a medical imaging system (100) using a computing device (400), the computing device (400) comprising a keypoint detection module (412) configured for detecting as output keypoint elements (122) of a patient table (120) of the medical imaging system (100) within optical sensor data (414) in response to receiving the optical sensor data (414), which is acquired using the optical sensor system (140), the optical sensor system (140) being configured for a supervision of the medical imaging system (100),
    the method comprising:

    - receiving optical sensor data (414) acquired using the optical sensor system (140), the received optical sensor data (414) comprising optical sensor data (414) of the patient table (120),
    - detecting the keypoint elements (122) within the optical sensor data (414) using the keypoint detection module (412),
    - determining, using the optical sensor data (414), two-dimensional horizontal coordinate values of the detected keypoint elements (122) within the first coordinate system, the two-dimensional horizontal coordinate values being descriptive of positions of the detected keypoint elements (122) in planes parallel to a sensor plane (146) of the optical sensor system (140),
    - determining third vertical coordinate values of the detected keypoint elements (122) within the first coordinate system, the third vertical coordinate values being descriptive of distances of the positions of the detected keypoint elements (122) from the sensor plane (146) of the optical sensor system (140),
    - receiving three-dimensional coordinates values descriptive of the positions of the detected keypoint elements (122) within the second coordinate system of the medical imaging system (100),
    - determining one or more transformation parameters (420) for a transformation from the first coordinate system to the second coordinate system using the coordinate values descriptive of the positions of the detected keypoint elements (122) within the first coordinate system and the coordinate values descriptive of the positions of the detected keypoint elements (122) within the second coordinate system.

2.  The method of claim 1, the transformation described by the one or more transformation parameters (420) comprising one or more of the following: one or more rotations, one or more translations, one or more distortions, a scaling.

3.  The method of any of the previous claims, the received optical sensor data (414) comprising optical sensor data (414) of the patient table (120) positioned in a position relative to the optical sensor system (140), for which a depth map descriptive of the distances of the detected keypoint elements (122) from the sensor plane (146) of the optical sensor system (140) is received, the third vertical coordinate values of the detected keypoint elements (122) being determined using the depth map.

4.  The method of any of the previous claims, the method further comprising receiving first reference values of horizontal distances between the detected keypoint elements (122) of the patient table (120) determined in first optical sensor reference data, the first optical sensor reference data comprising optical sensor data (414) of the patient table (120) positioned in a lower first reference position with first vertical reference distances of the detected keypoint elements (122) from the sensor plane (146) of the optical sensor system (140),

receiving second reference values of horizontal distances between the detected keypoint elements (122) of the patient table (120) determined in second optical sensor reference data, the second optical sensor reference data comprising optical sensor data (414) of the patient table (120) positioned in an upper second reference position with second vertical reference distances of the detected keypoint elements (122) from the sensor plane (146) of the optical sensor system (140),

the determining of the third vertical coordinate values of the detected keypoint elements (122) comprising:

determining values of horizontal distances between the detected keypoint elements (122) of the patient table (120) using the received optical data,

estimating the third vertical coordinate values using the determined values of horizontal distances, the received first reference values of horizontal distances and the first vertical reference distances, as well as the received second reference values of horizontal distances and the second vertical reference distances.

5. The method of claim 4, the lower first reference position being a lower minimum position of the patient table (120), the upper second reference position being an upper maximum position of the patient table (120), the estimating of the third vertical coordinate values comprising an interpolation of the third vertical coordinate values.

6. The method of any of the previous claims, the optical sensor system (140), the received optical sensor data (414) comprising optical sensor data (414) of the patient table (120) in a first horizonal position and optical sensor data (414) of the patient table (120) in a second horizonal position, the first and second horizontal positions of the patient table (120) are spaced apart from each other by a known distance,

the detecting of the keypoint elements (122) within the optical sensor data (414) comprising detecting the keypoint elements (122) within the optical sensor data (414) of the patient table (120) in the first horizonal position and detecting the keypoint elements (122) within the optical sensor data (414) of the patient table (120) in the second horizonal position,

the determining of the third vertical coordinate values of the detected keypoint elements (122) comprising triangulation using positions of the keypoint elements (122) detected within the optical sensor data (414) of the patient table (120) in the first horizonal position and positions of the keypoint elements (122) detected within the optical sensor data (414) of the patient table (120) in the second horizonal position.

7. The method of any of the previous claims, the optical sensor system (140) comprising at least two optical sensors arranged spaced apart from each other with a known fixed baseline,

the received optical sensor data (414) comprising first optical sensor data (414) acquired using a first optical sensor of the at least two optical sensors and second optical sensor data (414) acquired using a second optical sensor of the at least two optical sensors,

the detecting of the keypoint elements (122) within the optical sensor data (414) comprising detecting the keypoint elements (122) within the first optical sensor data (414) and detecting the keypoint elements (122) within the second optical sensor data (414),

the determining of the third vertical coordinate values of the detected keypoint elements (122) comprising triangulation using positions of the keypoint elements (122) detected within the first optical sensor data (414) and positions of the keypoint elements (122) detected within the second optical sensor data (414).

8. The method of any of the preceding claims, the keypoint detection module (412) being configured, in addition to detecting the keypoint elements (122), to output the third vertical coordinate values of the detected keypoint elements (122) in response receiving the optical sensor data (414), the determining of the third vertical coordinate values of the detected keypoint elements (122) comprising using the keypoint detection module (412).

9. The method of any of the previous claims, the keypoint elements (122) of the patient table (120) being distributed over a surface of patient table (120), in particular along a contour line of the patient table (120).

10. The method of any of the preceding claims, the method further comprising checking the calibration, the checking of the calibration comprising:

- determining within the first coordinate system coordinate values of positions of keypoint elements (122) detected within optical sensor test data acquired using the optical sensor system (140), the optical sensor test data comprising optical sensor data (414) of the patient table (120) positioned in a test position,
- receiving coordinate values of the positions of the keypoint elements (122) within the second coordinate system for the patient table (120) positioned in the test position,
- comparing the coordinate values of the first and second coordinate system using the determined one or more transformation parameters (420) for a transformation between the first and second coordinate system,
- in response to detecting a deviation between the compared coordinate values exceeding a predefined threshold, applying re-calibration, the applying of the re-calibration comprising initiating another calibration to determine one or more replacement transformation parameters (420) or using one or more other previously determined transformation parameters (420) as one or more replacement transformation parameters (420).

11. The method of any of the previous claims, the method further comprising:

- receiving in addition to the optical sensor data (414) used for the calibration a plurality of additional optical sensor data (414) acquired using the optical sensor system (140), the additional optical sensor data (414) comprising additional optical sensor data (414) of the patient table (120),
- detecting the keypoint elements (122) within the additional optical sensor data (414) using the keypoint detection module (412),
- the optical sensor data (414) used for the calibration being selected from a set of received optical sensor data (414) comprising in addition to the selected optical sensor data (414) the additional optical sensor data (414), the selecting comprising checking that confidence values determined for a predefined number of the keypoint elements (122) detected within the selected optical sensor data (414) exceed a predefined threshold.

12. The method of any of the previous claims, the method further comprising:

- providing training datasets for training the keypoint detection module (412), the training datasets comprising optical sensor training data and optical sensor training data with keypoint elements (122) of the patient table (120) labeled within the optical sensor training data,
- training the keypoint detection module (412) for detecting as output the labeled keypoint elements (122) of the patient table (120) within the optical sensor training data of the training datasets in response to receiving the optical sensor training data of the respective training dataset.

13. A computer program comprising machine executable instructions (410) for calibrating a first coordinate system of a field of view of an optical sensor system (140), the calibrating comprising a registering of the first coordinate system with a second coordinate system of a medical imaging system (100) using a keypoint detection module (412) configured for detecting as output keypoint elements (122) of a patient table (120) of the medical imaging system (100) within optical sensor data (414) in response to receiving the optical sensor data (414), which is acquired using the optical sensor system (140), the optical sensor system (140) being configured for a supervision of the medical imaging system (100),
execution of the machine executable instructions (410) by a processor (402) of a computing device (400) causing the processor (402) to control the computing device (400) to execute a method comprising:

- receiving optical sensor data (414) acquired using the optical sensor system (140), the received optical sensor data (414) comprising optical sensor data (414) of the patient table (120),
- detecting the keypoint elements (122) within the optical sensor data (414) using the keypoint detection module (412),
- determining, using the optical sensor data (414), two-dimensional horizontal coordinate values of the detected keypoint elements (122) within the first coordinate system, the two-dimensional horizontal coordinate values being descriptive of positions of the detected keypoint elements (122) in planes parallel to a sensor plane (146) of the optical sensor system (140),
- determining third vertical coordinate values of the detected keypoint elements (122) within the first coordinate system, the third vertical coordinate values being descriptive of distances of the positions of the detected keypoint elements (122) from the sensor plane (146) of the optical sensor system (140),
- receiving three-dimensional coordinates values descriptive of the positions of the detected keypoint elements (122) within the second coordinate system of the medical imaging system (100),
- determining one or more transformation parameters (420) of a transformation from the first coordinate system to the second coordinate system using the coordinate values descriptive of the positions of the detected keypoint elements (122) within the first coordinate system and the coordinate values descriptive of the positions of the detected keypoint elements (122) within the second coordinate system.

14. A computing device (400) for calibrating a first coordinate system of a field of view of an optical sensor system (140), the calibrating comprising a registering of the first coordinate system with a second coordinate system of a medical imaging system (100), the computing device (400) comprising a keypoint detection module (412) configured for detecting as output keypoint elements (122) of a patient table (120) of the medical imaging system (100) within optical sensor data (414) in response to receiving the optical sensor data (414), which is acquired using the optical sensor system (140), the optical sensor system (140) being configured for a supervision of the medical imaging system (100),

the computing device (400) comprising a processor (402) and a memory (404) with machine executable instructions (410) stored therein,
execution of the machine executable instructions (410) by the processor (402) of the computing device (400) causing the processor (402) to control the computing device (400) to execute a method comprising:

- receiving optical sensor data (414) acquired using the optical sensor system (140), the received optical sensor data (414) comprising optical sensor data (414) of the patient table (120),
- detecting the keypoint elements (122) within the optical sensor data (414) using the keypoint detection module (412),
- determining, using the optical sensor data (414), two-dimensional horizontal coordinate values of the detected keypoint elements (122) within the first coordinate system, the two-dimensional horizontal coordinate values being descriptive of positions of the detected keypoint elements (122) in planes parallel to a sensor plane (146) of the optical sensor system (140),
- determining third vertical coordinate values of the detected keypoint elements (122) within the first coordinate system, the third vertical coordinate values being descriptive of distances of the positions of the detected keypoint elements (122) from the sensor plane (146) of the optical sensor system (140),
- receiving three-dimensional coordinates values descriptive of the positions of the detected keypoint elements (122) within the second coordinate system of the medical imaging system (100),
- determining one or more transformation parameters (420) of a transformation from the first coordinate system to the second coordinate system using the coordinate values descriptive of the positions of the detected keypoint elements (122) within the first coordinate system and the coordinate values descriptive of the positions of the detected keypoint elements (122) within the second coordinate system.

15. A medical imaging system (100) comprising the computing device (400) of claim 14, an optical sensor system (140) configured for a supervision of the medical imaging system (100) and a patient table (120), the medical imaging system (100) being one of the following: a magnetic resonance imaging system (152), a computed tomography system, an X-ray imaging system.

| | |
|---|---|
| Receiving optical sensor data | 200 |

↓

| | |
|---|---|
| Detecting keypoint elements | 202 |

↓

| | |
|---|---|
| Determining two-dimensional horizontal coordinate values | 204 |

↓

| | |
|---|---|
| Determining third vertical coordinate values | 206 |

↓

| | |
|---|---|
| Receiving three-dimensional coordinates values | 208 |

↓

| | |
|---|---|
| Determining transformation parameters | 210 |

# Fig. 1

Fig. 2

EP 4 589 529 A1

| | |
|---|---|
| Receiving first reference values | 600 |

↓

| | |
|---|---|
| Receiving second reference values | 602 |

↓

Determining third vertical coordinate values {

| | |
|---|---|
| Determining horizontal distances | 604 |

↓

| | |
|---|---|
| Estimating the third vertical coordinate values | 606 |

## Fig. 3

| | |
|---|---|
| Determining coordinate values | 620 |

↓

| | |
|---|---|
| Receiving coordinate values | 622 |

↓

| | |
|---|---|
| Comparing coordinate values | 626 |

↓

628

⟨ Deviation exceeding threshold? ⟩ — NO

YES ↓

| | |
|---|---|
| Applying re-calibration | 630 |

↓

| | |
|---|---|
| Maintaining calibration | 632 |

## Fig. 4

| Receiving plurality of optical sensor data | 650 |

| Detecting keypoint elements | 652 |

654 NO

Threshold exceeded?

YES

| Selecting optical sensor data | 656 |

# Fig. 5

| Providing keypoint detection module | 670 |

| Providing training datasets | 672 |

| Training keypoint detection module | 674 |

# Fig. 6

Fig. 7

Fig. 8

Fig. 9

Fig. 10

Fig.11

Fig. 12

EP 4 589 529 A1

Europäisches
Patentamt

European
Patent Office

Office européen
des brevets

# EUROPEAN SEARCH REPORT

**Application Number**

EP 24 15 2423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 600 021 B2 (GE PREC HEALTHCARE LLC) 7 March 2023 (2023-03-07)<br><br>* abstract *<br>* column 1, lines 26-40 *<br>* column 2, lines 24-49 *<br>* column 3, lines 46-54 *<br>* column 5, lines 3-7 *<br>* column 13, lines 15-33 *<br>- - - - - | 1-3, 6-11, 13-15 | INV.<br>G06T7/33<br>G06T7/80 |
| X | US 2022/148157 A1 (PRASAD RAGHU [IN] ET AL) 12 May 2022 (2022-05-12)<br>* abstract *<br>* paragraphs [0010], [0037], [0038], [0044], [0051], [0053] *<br>- - - - - | 1-3,6-9, 12-15 | |
| A | US 7 986 988 B2 (SIEMENS MEDICAL SOLUTIONS [US]) 26 July 2011 (2011-07-26)<br>* column 1, lines 21-50 *<br>- - - - - | 1-15 | |

| TECHNICAL FIELDS SEARCHED (IPC) |
|---|
| G06T |

The present search report has been drawn up for all claims

| Place of search | Date of completion of the search | Examiner |
|---|---|---|
| Munich | 18 June 2024 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2423

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2024

| Patent document cited in search report | | Publication date | Patent family member(s) | | Publication date |
|---|---|---|---|---|---|
| US 11600021 | B2 | 07-03-2023 | CN | 112085797 A | 15-12-2020 |
| | | | US | 2020394821 A1 | 17-12-2020 |
| | | | US | 2023206501 A1 | 29-06-2023 |
| US 2022148157 | A1 | 12-05-2022 | CN | 114529502 A | 24-05-2022 |
| | | | US | 2022148157 A1 | 12-05-2022 |
| US 7986988 | B2 | 26-07-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OLAF RONNEBERGER**. *U-Net: Convolutional Networks for Biomedical Image Segmentation*, https://arxiv.org/abs/1505.04597